# EUROPEAN PATENT APPLICATION

(11) **EP 4 755 617 A1**
(43) Date of publication of application: **10.06.2026**
(21) Application number: 25211367.5
(22) Date of filing: 27.10.2025
(51) Int. Cl.: B29C 73/10

(54) **THERMOPLASTIC REPAIR PATCHES AND METHODS OF USE**

(30) Priority: 05.12.2024 US 202418970359
(71) Applicant: The Boeing Company, Arlington, VA 22202 (US)
(72) Inventor: Crothers, Phillip John, Arlington, VA, 22202 (US); Shi, Ying, Arlington, VA, 22202 (US); Rubin, Alexander Michael, Arlington, VA, 22202 (US)
(74) Representative: Hoffmann Eitle

(57) **Abstract**

A thermoplastic part (202, 302) with a thermoplastic repair patch (204, 304) and methods of repairing a thermoplastic part are presented. The thermoplastic part with a thermoplastic repair patch comprises a composite material (206) with a cut-out forming a repair area (210, 303), and the thermoplastic repair patch in the cut-out. The composite material has a first melting temperature (208, 230). The thermoplastic repair patch comprises a plurality of consolidated thermoplastic stacks (224, 226, 310, 312, 314, 400), each consolidated thermoplastic stack comprising thermoplastic composite plies (232, 244, 322, 324, 326, 406) between low melt thermoplastic surfaces (238, 240, 250, 252, 402, 404) having a second melting temperature (208, 230) lower than the first melting temperature.

## Description

### BACKGROUND INFORMATION

### 1. Field:

The present disclosure relates generally to thermoplastic materials and more specifically to thermoplastic repair.

### 2. Background:

Repair of large thermoplastic parts is undesirably difficult for aerospace structural repair. Existing thermoplastic repair processes involve the secondary bonding or bolting of dissimilar materials to the thermoplastic substructure. This inhibits flush or near-flush repair for aerodynamic surfaces.

One repair process utilizes a thermoset repair patch that is secondarily bonded to the thermoplastic structure after extensive surface preparation. The extensive surface preparations can comprise sanding and plasma heating. The extensive surface preparations are undesirably difficult to perform and undesirably time consuming. The process controls for the surface preparation are very difficult to implement in the operational field. Curing the thermoset repair patch takes an undesirable amount of time and skilled operation. A resulting repair is dependent upon the surface preparations and cure of the thermoset patch.

Another existing solution is the bolted repair of an area. However, bolted repair generally does not result in an aerodynamic surface for external surface repair.

Therefore, it would be desirable to have a method and apparatus that takes into account at least some of the issues discussed above, as well as other possible issues.

### SUMMARY

An embodiment of the present disclosure provides a thermoplastic part with a thermoplastic repair patch. The thermoplastic part with a thermoplastic repair patch comprises a composite material with a cut-out forming a repair area, and the thermoplastic repair patch in the cut-out. The composite material has a first melting temperature. The thermoplastic repair patch comprises a plurality of consolidated thermoplastic stacks, each consolidated thermoplastic stack comprising thermoplastic composite plies between low melt thermoplastic surfaces having a second melting temperature lower than the first melting temperature.

An embodiment of the present disclosure provides a method of repairing a thermoplastic part. A low melt thermoplastic film is placed onto a repair area of a thermoplastic part. A plurality of consolidated thermoplastic stacks is placed over the low melt thermoplastic film to form a thermoplastic repair patch. The thermoplastic repair patch is heated to a processing temperature below a melting temperature of the thermoplastic part.

Another embodiment of the present disclosure provides a method of repairing a thermoplastic part. A low melt thermoplastic film is placed onto a repair area of a thermoplastic part. A first consolidated thermoplastic stack is placed over the low melt thermoplastic film. The first consolidated thermoplastic stack is heated to a processing temperature below a melting temperature of the thermoplastic part. A second consolidated thermoplastic stack is placed over the low melt thermoplastic film. The second consolidated thermoplastic stack is heated to the processing temperature to form a thermoplastic repair patch in the repair area.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view of a thermoplastic repair patch being applied to a thermoplastic part in accordance with an illustrative embodiment;
**Figure 4** is an illustration of a cross-sectional view of a consolidated thermoplastic stack for a thermoplastic repair patch in accordance with an illustrative embodiment;
**Figure 5** is a flowchart of a method of repairing a thermoplastic part in accordance with an illustrative embodiment;
**Figure 6** is a flowchart of a method of repairing a thermoplastic part in accordance with an illustrative embodiment;
**Figure 7** is an illustration of an aircraft manufacturing and service method in a form of a block diagram in accordance with an illustrative embodiment; and
**Figure 8** is an illustration of an aircraft in a form of a block diagram in which an illustrative embodiment may be implemented.

### DETAILED DESCRIPTION

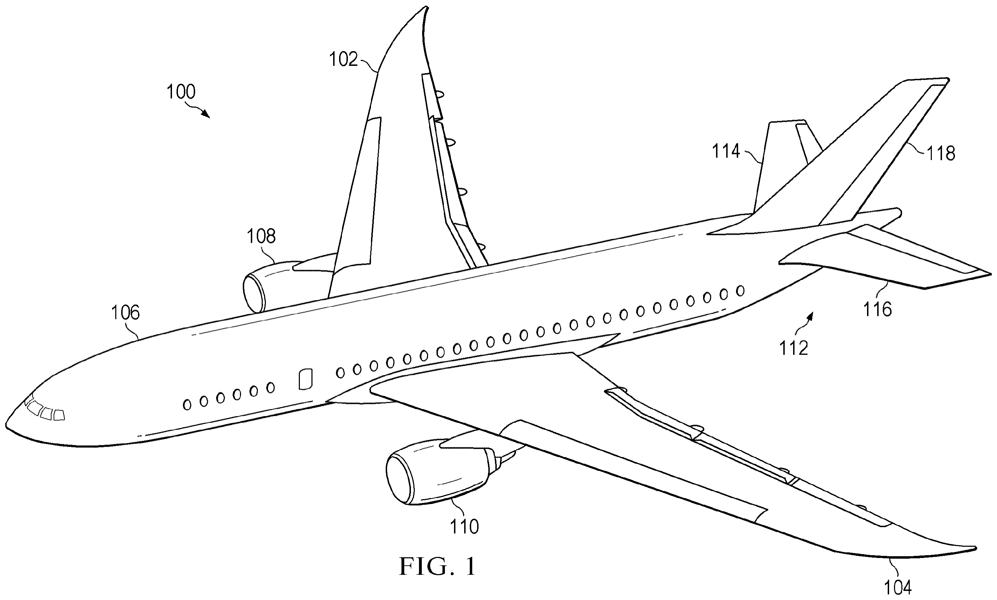

Turning now to **Figure 1**, an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114**, horizontal stabilizer **116**, and vertical stabilizer **118** are attached to tail section **112** of body **106.**

Aircraft **100** is an example of an aircraft that can have thermoplastic parts repaired using a thermoplastic repair patch of the illustrative examples. A thermoplastic repair patch can be used to repair a thermoplastic part of aircraft **100** during maintenance.

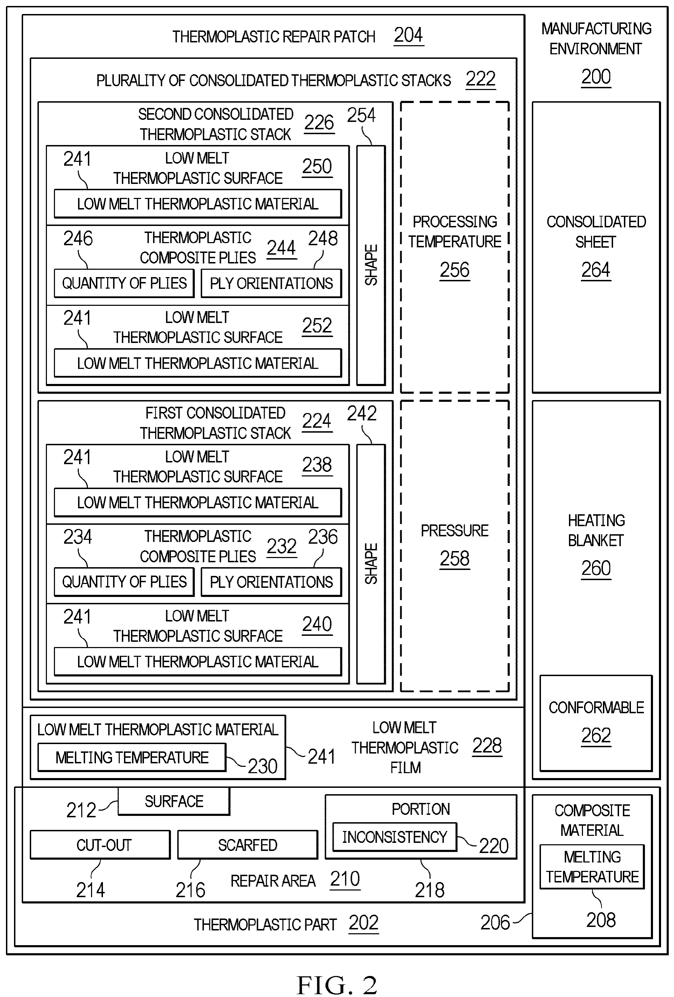

Turning now to **Figure 2**, an illustration of a block diagram of a manufacturing environment is depicted in accordance with an illustrative embodiment. Thermoplastic part **202** with thermoplastic repair patch **204** is present in manufacturing environment **200.** Thermoplastic part **202** comprises composite material **206** with cut-out **214** forming repair area **210.** Composite material **206** has a first melting temperature, melting temperature **208.** In some illustrative examples, melting temperature **208** is greater than 340 degrees Celsius.

Thermoplastic repair patch **204** in cut-out **214** comprises plurality of consolidated thermoplastic stacks **222.** Each consolidated thermoplastic stack of plurality of consolidated thermoplastic stacks **222** comprises thermoplastic composite plies between low melt thermoplastic surfaces having a second melting temperature lower than the first melting temperature.

Plurality of consolidated thermoplastic stacks **222** comprises any desirable quantity of consolidated thermoplastic stacks. In this illustrative example, plurality of consolidated thermoplastic stacks **222** comprises two consolidated thermoplastic stacks. Plurality of consolidated thermoplastic stacks **222** comprises first consolidated thermoplastic stack **224** and second consolidated thermoplastic stack **226.**

First consolidated thermoplastic stack **224** comprises thermoplastic composite plies **232** between low melt thermoplastic surfaces, low melt thermoplastic surface **238** and low melt thermoplastic surface **240**, having a second melting temperature lower than the first melting temperature. In this illustrative example, low melt thermoplastic surface **238** and low melt thermoplastic surface **240** are formed of low melt thermoplastic material **241** having melting temperature **230.** Melting temperature **230** can be referred to as the second melting temperature. In some illustrative examples, melting temperature **230** is between 260 degrees Celsius and 335 degrees Celsius.

Second consolidated thermoplastic stack **226** comprises thermoplastic composite plies **244** between low melt thermoplastic surfaces, low melt thermoplastic surface **250** and low melt thermoplastic surface **252**, having a second melting temperature lower than the first melting temperature. In this illustrative example, low melt thermoplastic surface **250** and low melt thermoplastic surface **252** are formed of low melt thermoplastic material **241** having melting temperature **230.**

Second consolidated thermoplastic stack **226** is placed on top of first consolidated thermoplastic stack **224** so that first consolidated thermoplastic stack **224** and second consolidated thermoplastic stack **226** are consecutive in a direction through the thickness of thermoplastic part **202.** In this illustrative example, first consolidated thermoplastic stack **224** is placed into repair area **210** first.

In some illustrative examples, low melt thermoplastic film **228** is placed into repair area **210** and heated to processing temperature **256** to bond low melt thermoplastic film **228** to thermoplastic part **202.**

In some illustrative examples, repair area **210** is created by removing inconsistency **220** from thermoplastic part **202.** In some illustrative examples, repair area **210** comprises surface **212** of thermoplastic part **202** in cut-out **214** formed by removing inconsistency **220** from thermoplastic part **202.**

In some illustrative examples, repair area **210** comprises portion **218** of thermoplastic part **202** after inconsistency **220** has been removed from thermoplastic part **202.** In some illustrative examples, a series of layers of composite material have been cut away from thermoplastic part **202** to create repair area **210.**

Repair area **210** can have any desirable size or shape. In some illustrative examples, repair area **210** is scarfed **216.**

Thermoplastic composite plies of thermoplastic repair patch **204** are already consolidated. In some illustrative examples, thermoplastic composite plies of thermoplastic repair patch **204** are the same material as thermoplastic part **202.** Heating blanket **260** is heated to heat thermoplastic repair patch **204** to processing temperature **256.** Processing temperature **256** is selected to be below melting temperature **208** of thermoplastic part **202.** Processing temperature **256** is selected such that thermoplastic composite plies of thermoplastic repair patch **204** remain consolidated. Processing temperature **256** is selected to melt low melt thermoplastic material **241.** In some illustrative examples, processing temperature **256** is approximately 280°C -340°C.

In some illustrative examples, heating blanket **260** is sufficiently conformable **262** to conform to thermoplastic repair patch **204** on thermoplastic part **202.** In some illustrative examples, heating blanket **260** is sufficiently conformable **262** to conform to cut-out **214.** In some illustrative examples, heating blanket **260** is sufficiently conformable **262** to conform to first consolidated thermoplastic stack **224** in cut-out **214.**

During heating of thermoplastic repair patch **204,** pressure **258** is applied to thermoplastic repair patch **204** to adhere thermoplastic repair patch **204.** In some illustrative examples, pressure **258** below 103 kPa (15 psi) is applied to thermoplastic repair patch **204** while heating thermoplastic repair patch **204** to join thermoplastic repair patch **204** to thermoplastic part **202.**

Low melt thermoplastic film **228** is between thermoplastic repair patch **204** and repair area **210.** Low melt thermoplastic film **228** comprises low melt thermoplastic material **241** having melting temperature **230.**

Plurality of consolidated thermoplastic stacks **222** is joined by the low melt thermoplastic surfaces. First consolidated thermoplastic stack **224** is joined to thermoplastic part **202** by low melt thermoplastic film **228** and low melt thermoplastic surface **240.** By heating low melt thermoplastic material **241** to processing temperature **256** and applying pressure **258,** low melt thermoplastic surface **240** and low melt thermoplastic film **228** are joined.

Second consolidated thermoplastic stack **226** is joined to first consolidated thermoplastic stack **224** by low melt thermoplastic surface **238** and low melt thermoplastic surface **252.** By heating low melt thermoplastic material **241** to processing temperature **256** and applying pressure **258,** low melt thermoplastic surface **238** and low melt thermoplastic surface **252** are joined.

Thermoplastic composite plies **232** of first consolidated thermoplastic stack **224** comprises quantity of plies **234** and ply orientations **236.** Ply orientations **236** comprises any desirable fiber angles. In some illustrative examples, ply orientations **236** can be selected from at least one of 0 degrees, 90 degrees, +/-45 degrees, +/-30 degrees, or +/-60 degrees. In some illustrative examples, ply orientations **236** are selected to approximate ply orientations of plies of thermoplastic part **202** that were removed from cut-out **214.** Quantity of plies **234** can comprise any desirable quantity of plies. In some illustrative examples, quantity of plies **234** comprises between two and six plies.

First consolidated thermoplastic stack **224** has shape **242.** Shape **242** is selected to fill a portion of cut-out **214.** When cut-out **214** is scarfed **216,** shape **242** of first consolidated thermoplastic stack **224** is different from shape **254** of second consolidated thermoplastic stack **226.**

In some illustrative examples, shape **242** of first consolidated thermoplastic stack **224** can be cut out from a consolidated sheet, such as consolidated sheet **264.** Consolidated sheet **264** comprises a plurality of thermoplastic composite plies between two low melt thermoplastic surfaces. A plurality of different shapes can be cut from consolidated sheet **264** to form consolidated thermoplastic stacks for repair. In some other illustrative examples, shape **242** of first consolidated thermoplastic stack **224** can be laid up individually.

Thermoplastic composite plies **244** of second consolidated thermoplastic stack **226** comprises quantity of plies **246** and ply orientations **248.** Ply orientations **248** comprises any desirable fiber angles. In some illustrative examples, ply orientations **248** can be selected from at least one of 0 degrees, 90 degrees, +/-45 degrees, +/-30 degrees, or +/-60 degrees. In some illustrative examples, ply orientations **248** are selected to approximate ply orientations of plies of thermoplastic part **202** that were removed from cut-out **214.** Quantity of plies **246** can comprise any desirable quantity of plies. In some illustrative examples, quantity of plies **246** comprises between two and six plies.

In some illustrative examples, shape **254** of second consolidated thermoplastic stack **226** can be cut out from a consolidated sheet, such as consolidated sheet **264.** In some illustrative examples, ply orientations **248** are the same as ply orientations **236** and quantity of plies **246** is the same as quantity of plies **234.** In these illustrative examples, second consolidated thermoplastic stack **226** and first consolidated thermoplastic stack **224** can both be cut from consolidated sheet **264.** In other illustrative examples, first consolidated thermoplastic stack **224** and second consolidated thermoplastic stack **226** are cut from two different consolidated sheets. In some other illustrative examples, shape **254** of second consolidated thermoplastic stack **226** can be laid up individually.

In some illustrative examples, low melt thermoplastic film **228** and plurality of consolidated thermoplastic stacks **222** are joined to thermoplastic part **202** simultaneously. In some illustrative examples, low melt thermoplastic film **228** and plurality of consolidated thermoplastic stacks **222** are all placed into cut-out **214** prior to applying processing temperature **256** and pressure **258.** In some illustrative examples, processing temperature **256** and pressure **258** are applied to low melt thermoplastic film **228** in cut-out **214** prior to applying any of plurality of consolidated thermoplastic stacks **222** to cut-out **214.**

In some illustrative examples, processing temperature **256** and pressure **258** are applied to low melt thermoplastic film **228** in cut-out **214** prior to applying first consolidated thermoplastic stack **224** to cut-out **214.** In some illustrative examples, processing temperature **256** and pressure **258** are applied to first consolidated thermoplastic stack **224** in cut-out **214** prior to applying second consolidated thermoplastic stack **226** over first consolidated thermoplastic stack **224.** In some illustrative examples, processing temperature **256** and pressure **258** is repeatedly applied to materials in repair area **210** until all portions of thermoplastic repair patch **204** have been applied and processed.

The illustration of manufacturing environment **200 in** **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although only two consolidated thermoplastic stacks are depicted in thermoplastic repair patch **204,** more than two consolidated thermoplastic stacks can be present in a thermoplastic repair patch. Although each of the low melt thermoplastic surfaces and low melt thermoplastic film **228** all comprise low melt thermoplastic material **241,** in some non-depicted examples more than one type of thermoplastic material can be present in a thermoplastic repair patch and low melt thermoplastic film. Additionally, in some illustrative examples, at least one of quantity of plies **246** or quantity of plies **234** comprises a single ply.

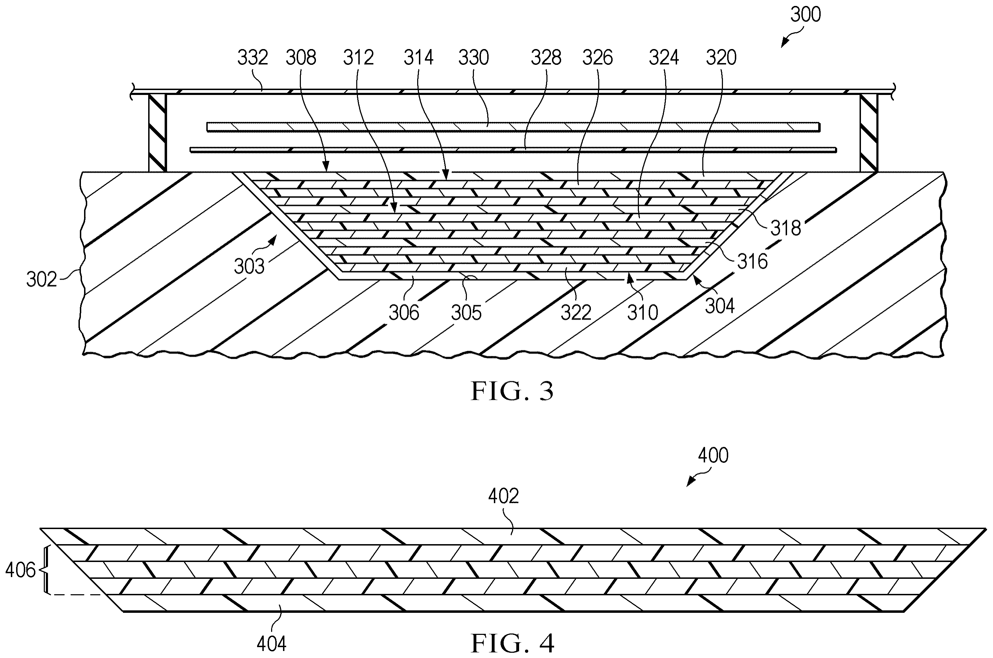

Turning now to **Figure 3****,** an illustration of a cross-sectional view of a thermoplastic repair patch being applied to a thermoplastic part is depicted in accordance with an illustrative embodiment. View **300** can be a view of repairing a thermoplastic part of aircraft **100** of **Figure 1****.** View **300** can be a view of repairing thermoplastic part **202** using thermoplastic repair patch **204** of **Figure 2****.**

In view **300**, thermoplastic repair patch **304** is present in cut-out **305** of repair area **303** of thermoplastic part **302**. Low melt thermoplastic film **306** is present between thermoplastic repair patch **304** and repair area **303**. Thermoplastic repair patch **304** in cut-out **305** comprises plurality of consolidated thermoplastic stacks **308**. Each consolidated thermoplastic stack comprises thermoplastic composite plies between low melt thermoplastic surfaces.

In this illustrative example, plurality of consolidated thermoplastic stacks **308** comprises consolidated thermoplastic stack **310**, consolidated thermoplastic stack **312**, and consolidated thermoplastic stack **314**. Consolidated thermoplastic stack **310** comprises thermoplastic composite plies **322** between low melt thermoplastic surfaces. Consolidated thermoplastic stack **310** comprises a low melt thermoplastic surface in contact with low melt thermoplastic film **306**. Consolidated thermoplastic stack **310** comprises a low melt thermoplastic surface forming part of low melt thermoplastic material **316**.

Consolidated thermoplastic stack **312** comprises thermoplastic composite plies **324** between low melt thermoplastic surfaces. Consolidated thermoplastic stack **312** comprises a low melt thermoplastic surface forming part of low melt thermoplastic material **316**. Consolidated thermoplastic stack **312** comprises a low melt thermoplastic surface forming part of low melt thermoplastic material **318**.

Consolidated thermoplastic stack **314** comprises thermoplastic composite plies **326** between low melt thermoplastic surfaces. Consolidated thermoplastic stack **314** comprises a low melt thermoplastic surface forming part of low melt thermoplastic material **318**. Consolidated thermoplastic stack **314** comprises a low melt thermoplastic surface forming low melt thermoplastic material **320.**

In view **300**, a processing temperature and pressure have been applied to thermoplastic repair patch **304.** By applying the processing temperature, the low melt thermoplastic surfaces have been melted to join plurality of consolidated thermoplastic stacks **308.** By applying the processing temperature, the low melt thermoplastic surfaces have been melted to form low melt thermoplastic material **316,** low melt thermoplastic material **318**, and low melt thermoplastic material **320**.

The processing temperature is applied to thermoplastic repair patch **304** by heating blanket **330**. Release film **328** is positioned between thermoplastic repair patch **304** and heating blanket **330**. In this illustrative example, vacuum bag **332** is sealed around repair area **303** for repair processing.

The illustration of applying thermoplastic repair patch **304** in **Figure 3** is not meant to imply physical or architectural limitations to the manner in which an illustrative embodiment may be implemented. Other components in addition to or in place of the ones illustrated may be used. Some components may be unnecessary. For example, thermoplastic repair patch **304** can have any desirable quantity of consolidated thermoplastic stacks. Although three consolidated thermoplastic stacks are depicted, thermoplastic repair patch **304** can have greater than three or less than three consolidated thermoplastic stacks. Although a single heating blanket is depicted in **Figure 3**, in some illustrative examples, heating blankets can be applied to both external surfaces of the repair area to get the desired heat profile into the areas of interest for film melt and consolidation.

Turning now to **Figure 4**, an illustration of a cross-sectional view of a consolidated thermoplastic stack for a thermoplastic repair patch is depicted in accordance with an illustrative embodiment. Consolidated thermoplastic stack **400** can be used to repair a thermoplastic part of aircraft **100 of** **Figure 1**. Consolidated thermoplastic stack **400** is a physical implementation of one of plurality of consolidated thermoplastic stacks **222** of **Figure 2**. Consolidated thermoplastic stack **400** can be a portion of thermoplastic repair patch **304** of **Figure 3**.

Consolidated thermoplastic stack **400** comprises thermoplastic composite plies **406** between low melt thermoplastic surfaces. Thermoplastic composite plies **406** are between low melt thermoplastic surface **402** and low melt thermoplastic surface **404.** Low melt thermoplastic surface **402** and low melt thermoplastic surface **404** are formed of a low melt thermoplastic film having a melting temperature below the melting temperature of thermoplastic composite plies **406.** Low melt thermoplastic surface **402** and low melt thermoplastic surface **404** can be used to bond consolidated thermoplastic stack **400** to other consolidated thermoplastic stacks.

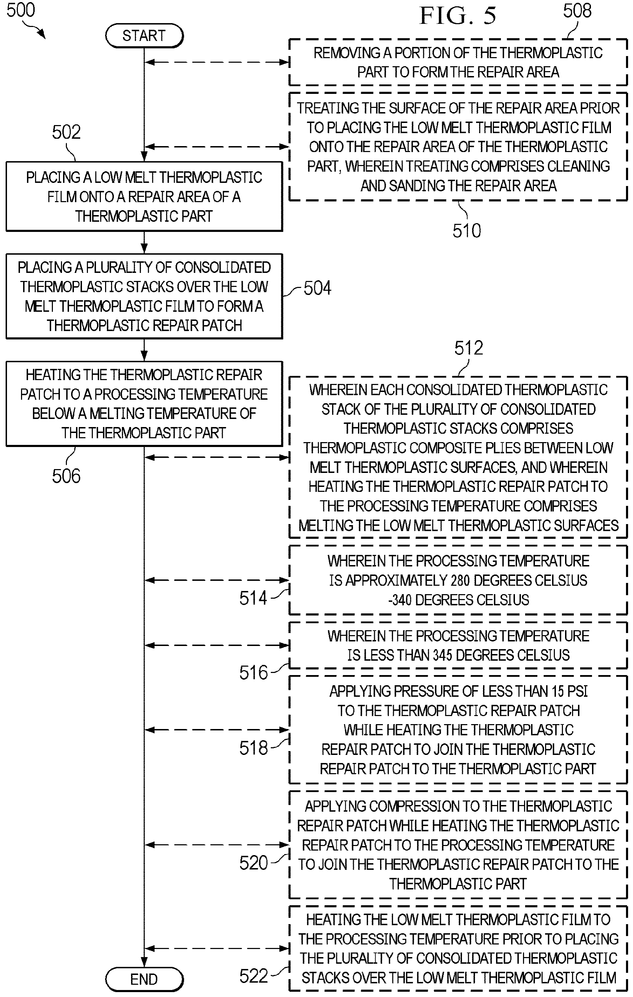

Turning now to **Figure 5**, a flowchart of a method of repairing a thermoplastic part is depicted in accordance with an illustrative embodiment. Method **500** can be implemented to repair a thermoplastic part of aircraft **100** of **Figure 1****.** Method **500** can be implemented to repair thermoplastic part **202** using thermoplastic repair patch **204** of **Figure 2****.** Method **500** can be used to repair thermoplastic part **302** using thermoplastic repair patch **304** of **Figure 3****.** Consolidated thermoplastic stack **400** of **Figure 4** can be one of the plurality of consolidated thermoplastic stacks of method **500**.

Method **500** places a low melt thermoplastic film onto a repair area of a thermoplastic part (operation **502**). Method **500** places a plurality of consolidated thermoplastic stacks over the low melt thermoplastic film to form a thermoplastic repair patch (operation **504**). Method **500** heats the thermoplastic repair patch to a processing temperature below a melting temperature of the thermoplastic part (operation **506**). Afterwards, method 500 terminates.

In some illustrative examples, method **500** removes a portion of the thermoplastic part to form the repair area (operation **508**). In some illustrative examples, the portion of the thermoplastic part removed comprises an inconsistency. In some illustrative examples, removing the inconsistency from the thermoplastic part comprises removing material to form a scarfed cut-out.

In some illustrative examples, method **500** treats a surface of the repair area prior to placing the low melt thermoplastic film onto the repair area of the thermoplastic part, wherein treating comprises cleaning and sanding the repair area (operation **510**). In some illustrative examples, treating the surface of the thermoplastic part takes considerably less time, less energy, or is less complicated than treating a thermoplastic surface to join to a thermoset repair patch.

In some illustrative examples, each consolidated thermoplastic stack of the plurality of consolidated thermoplastic stacks comprises thermoplastic composite plies between low melt thermoplastic surfaces, and wherein heating the thermoplastic repair patch to the processing temperature comprises melting the low melt thermoplastic surfaces (operation **512**). In these illustrative examples, melting the low melt thermoplastic surfaces joins the low melt thermoplastic surfaces together.

In some illustrative examples, the processing temperature is approximately 280 degrees Celsius - 340 degrees Celsius (operation **514**). In some illustrative examples, the processing temperature is less than 345 degrees Celsius (operation **516**). The processing temperature is selected such that the thermoplastic part remains consolidated while the low melt thermoplastic material melts. The processing temperature is selected such that the consolidated thermoplastic composite plies remain consolidated.

In some illustrative examples, method **500** applies pressure of less than 103 kPa (15 psi) to the thermoplastic repair patch while heating the thermoplastic repair patch to join the thermoplastic repair patch to the thermoplastic part (operation **518**). In some illustrative examples, method **500** applies compression to the thermoplastic repair patch while heating the thermoplastic repair patch to the processing temperature to join the thermoplastic repair patch to the thermoplastic part (operation **520**).

In some illustrative examples, method **500** heats the low melt thermoplastic film to the processing temperature prior to placing the plurality of consolidated thermoplastic stacks over the low melt thermoplastic film (operation **522**). In some illustrative examples, the low melt thermoplastic film and the plurality of consolidated thermoplastic stacks are placed in the repair area prior to heating the low melt thermoplastic film to the processing temperature.

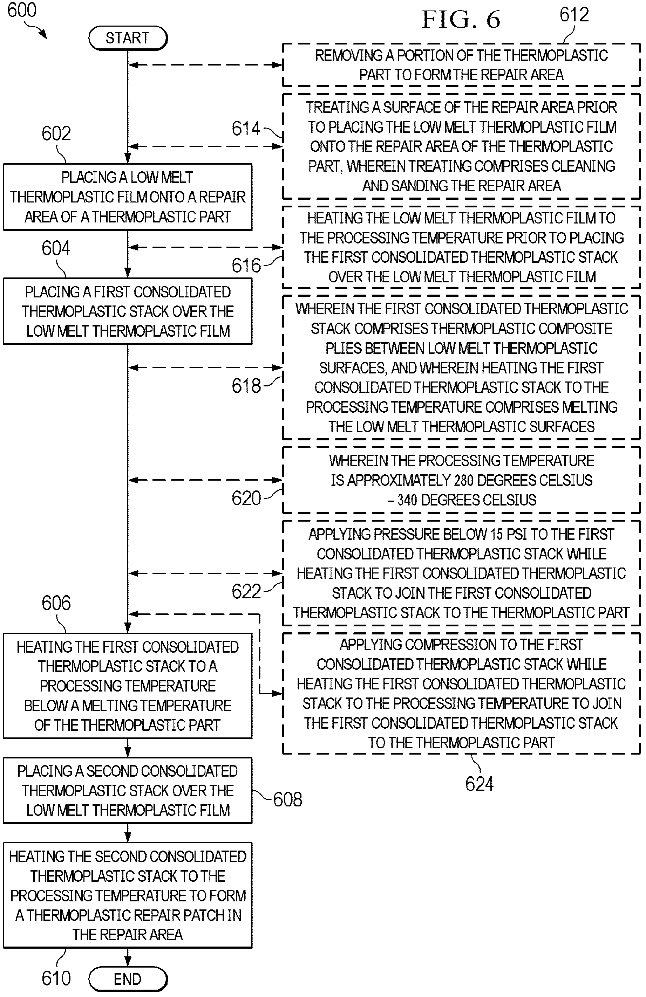

Turning now to **Figure 6**, a flowchart of a method of repairing a thermoplastic part is depicted in accordance with an illustrative embodiment. Method **600** can be implemented to repair a thermoplastic part of aircraft **100** of **Figure 1****.** Method **600** can be implemented to repair thermoplastic part **202** using thermoplastic repair patch **204** of **Figure 2****.** Method **600** can be used to repair thermoplastic part **302** using thermoplastic repair patch **304** of **Figure 3****.** Consolidated thermoplastic stack **400** of **Figure 4** can be one of the plurality of consolidated thermoplastic stacks of method **600.**

Method **600** places a low melt thermoplastic film onto a repair area of a thermoplastic part (operation **602).** Method **600** places a first consolidated thermoplastic stack over the low melt thermoplastic film (operation **604**). Method **600** heats the first consolidated thermoplastic stack to a processing temperature below a melting temperature of the thermoplastic part (operation **606).** Method **600** places a second consolidated thermoplastic stack over the low melt thermoplastic film (operation **608**). Method **600** heats the second consolidated thermoplastic stack to the processing temperature to form a thermoplastic repair patch in the repair area (operation **610**). Afterwards, method **600** terminates.

In some illustrative examples, method **600** further comprises removing a portion of the thermoplastic part to form the repair area (operation **612**). In some illustrative examples, method **600** further comprises treating a surface of the repair area prior to placing the low melt thermoplastic film onto the repair area of the thermoplastic part, wherein treating comprises cleaning and sanding the repair area (operation **614**).

In some illustrative examples, method **600** further comprises heating the low melt thermoplastic film to the processing temperature prior to placing the first consolidated thermoplastic stack over the low melt thermoplastic film (operation **616**). The processing temperature is selected such that the thermoplastic part remains consolidated while the low melt thermoplastic material melts.

In some illustrative examples, the first consolidated thermoplastic stack comprises thermoplastic composite plies between low melt thermoplastic surfaces, and wherein heating the first consolidated thermoplastic stack to the processing temperature comprises melting the low melt thermoplastic surfaces (operation **618**). The processing temperature is selected such that the consolidated thermoplastic composite plies remain consolidated.

In some illustrative examples, the processing temperature is approximately 280 degrees celsius - 340 degrees Celsius (operation **620**). In some illustrative examples, method **600** further comprises applying pressure below 103 kPa (15 psi) to the first consolidated thermoplastic stack while heating the first consolidated thermoplastic stack to join the first consolidated thermoplastic stack to the thermoplastic part (operation **622).** In some illustrative examples, method **600** further comprises applying compression to the first consolidated thermoplastic stack while heating the first consolidated thermoplastic stack to the processing temperature to join the first consolidated thermoplastic stack to the thermoplastic part (operation **624**).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **508** through operation **522** may be optional. As another example, operation **612** through operation **624** may be optional.

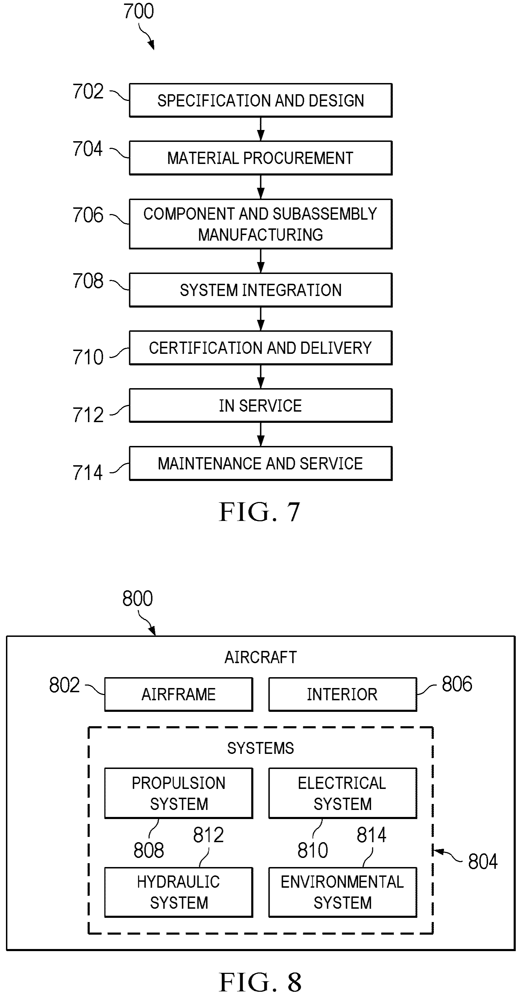

Illustrative embodiments of the present disclosure may be described in the context of aircraft manufacturing and service method **700** as shown in **Figure 7** and aircraft **800** as shown in **Figure 8**. Turning first to **Figure 7****,** an illustration of an aircraft manufacturing and service method in a form of a block diagram is depicted in accordance with an illustrative embodiment. During pre-production, aircraft manufacturing and service method **700** may include specification and design **702** of aircraft **800** in **Figure 8** and material procurement **704**.

During production, component and subassembly manufacturing **706** and system integration **708** of aircraft **800** takes place. Thereafter, aircraft **800** may go through certification and delivery **710** in order to be placed in service **712**. While in service **712** by a customer, aircraft **800** is scheduled for routine maintenance and service **714**, which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8**, an illustration of an aircraft in a form of a block diagram is depicted in which an illustrative embodiment may be implemented. In this example, aircraft **800** is produced by aircraft manufacturing and service method **700** of **Figure 7** and may include airframe **802** with plurality of systems **804** and interior **806**. Examples of systems **804** include one or more of propulsion system **808**, electrical system **810**, hydraulic system **812**, and environmental system **814.** Any number of other systems may be included.

Apparatuses and methods embodied herein may be employed during at least one of the stages of aircraft manufacturing and service method **700.** One or more illustrative embodiments may be manufactured or used during at least one of component and subassembly manufacturing **706**, system integration **708**, in service **712,** or maintenance and service **714** of **Figure 7****.**

The illustrative examples present a thermoplastic repair patch with low-melt thermoplastic film. The use of low-melt thermoplastic film enables thermoplastic co-melting to the structure to be repaired. The illustrative examples enables a lower temperature and lower pressure processing of the patch to the material enables. The illustrative examples enable less tooling and less heat to be applied when compared to a repair conducted with higher temperature thermoplastic materials.

The illustrative examples enable greater structural and processing robustness in the repair, when compared to thermoset repair materials. The illustrative examples utilize less complicated surface preparations than thermoset patches for repairing the thermoplastic part. Thermoplastic processing and joining is far less sensitive to surface preparation and other boundary conditions than thermoset repair processing methods.

The illustrative examples provide repair for the thermoplastic part with a reduced repair time compared to using thermoset patches. The time for thermoplastic processing is a fraction of the time for thermoset processing.

The choice of formulation of the low-melt thermoplastic film is compatible with the base structural thermoplastic material. The low-melt thermoplastic film in the illustrative examples enables co-melt to join structurally and chemically at a lower temperature and pressure than for the processing of the base structural material. In the illustrative examples, the structural material does not soften or deconsolidate during the repair processing.

In the illustrative examples, the base thermoplastic material is a high-temperature melt/consolidation. In some illustrative examples, the high temperature melt/consolidation for the base thermoplastic material is 380 degrees Celsius and above. The illustrative examples provide a thermoplastic film of melt-temperature 260 degrees Celsius - 335 degrees Celsius to join the base high temperature thermoplastics.

The illustrative examples present a method comprising performing a heat/pressure process that creates a co-cure/co-melt structure between the base and low-melt thermoplastic materials. In some illustrative examples, the heat/pressure process comprises applying a temperature below 345 degrees Celsius. In some illustrative examples, the heat/pressure process comprises applying a pressure of less than 103 kPa (15 psi).

The illustrative examples utilize an external heat source. In some illustrative examples, the external heat source is a heating blanket that conforms to the surface of the structure to be repaired, including the repair scarf profile.

A first low-temp thermoplastic film layer is joined to the substructure/base thermoplastic material. The scarfed void can be filled with thermoplastic materials. The filler materials are made of unique plies which have been pre-fabricated for this purpose. Each unique repair filler ply is a sandwich of low-temp film, base thermoplastic material, and low-temp film. The thermoplastic base material which forms the center of the sandwich can be a single unidirectional ply or can be made up of 2-6 plies of varying orientations. One example of thermoplastic composite plies can be three thermoplastic layers having a 45/0/-45 orientation. The thermoplastic composite plies can comprise any desirable quantity of plies. A lower ply number can allow easier conformance at room temperature to the scarf profile to be filled.

In some illustrative examples, the filler materials are fabricated in large sheets, and the filler plies for the scarf void are cut from the sheets to fit the scarf pattern. The cut thermoplastic consolidated stacks are then applied to the void, and vacuum-bag pressure is applied. The heating blanket is then applied, and the patch is processed per the consolidation temperature profile of the low-melt thermoplastic film.

In some illustrative examples, depending on heat transfer characteristics of the applied environment, the patch may be heated/applied sequentially. In some illustrative examples, if the thermoplastic repair patch is too thick to transfer heat from the external heating blanket through the whole repair area to achieve the melt temperature, consolidated thermoplastic stacks can be applied and heated individually or in sets. In some illustrative examples, sets of consolidated thermoplastic stacks can be applied a smaller number of filler materials and heat, and repeat this stacking build-up until the repair is finished. After completion of the heat cycle, the repair area can be inspected.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.
The present disclosure further comprises the following items:
1. A thermoplastic part with a thermoplastic repair patch comprising:
   a composite material with a cut-out forming a repair area, the composite material having a first melting temperature; and
   the thermoplastic repair patch in the cut-out, the thermoplastic repair patch comprising a plurality of consolidated thermoplastic stacks, each consolidated thermoplastic stack comprising thermoplastic composite plies between low melt thermoplastic surfaces having a second melting temperature lower than the first melting temperature.
2. The thermoplastic part of item 1 further comprising a low melt thermoplastic film between the thermoplastic repair patch and the repair area.
3. The thermoplastic part of item 1, wherein the first melting temperature is greater than 340 degrees Celsius.
4. The thermoplastic part of item 1, wherein the second melting temperature is between 260 degrees Celsius and 335 degrees Celsius.
5. The thermoplastic part of item 1, wherein the plurality of consolidated thermoplastic stacks is joined by the low melt thermoplastic surfaces.
6. A method of repairing a thermoplastic part comprising:
   placing a low melt thermoplastic film onto a repair area of a thermoplastic part;
   placing a plurality of consolidated thermoplastic stacks over the low melt thermoplastic film to form a thermoplastic repair patch; and
   heating the thermoplastic repair patch to a processing temperature below a melting temperature of the thermoplastic part.
7. The method of item 6, wherein each consolidated thermoplastic stack of the plurality of consolidated thermoplastic stacks comprises thermoplastic composite plies between low melt thermoplastic surfaces, and wherein heating the thermoplastic repair patch to the processing temperature comprises melting the low melt thermoplastic surfaces.
8. The method of item 6, wherein the processing temperature is approximately 280 degrees Celsius - 340 degrees Celsius.
9. The method of item 6 further comprising:
   applying pressure below 15 psi to the thermoplastic repair patch while heating the thermoplastic repair patch to join the thermoplastic repair patch to the thermoplastic part.
10. The method of item 6 further comprising:
   applying compression to the thermoplastic repair patch while heating the thermoplastic repair patch to the processing temperature to join the thermoplastic repair patch to the thermoplastic part.
11. The method of item 6 further comprising:
   heating the low melt thermoplastic film to the processing temperature prior to placing the plurality of consolidated thermoplastic stacks over the low melt thermoplastic film.
12. The method of item 6 further comprising:
   removing a portion of the thermoplastic part to form the repair area.
13. The method of item 12 further comprising:
   treating a surface of the repair area prior to placing the low melt thermoplastic film onto the repair area of the thermoplastic part, wherein treating comprises cleaning and sanding the repair area.
14. A method of repairing a thermoplastic part comprising:
   placing a low melt thermoplastic film onto a repair area of a thermoplastic part;
   placing a first consolidated thermoplastic stack over the low melt thermoplastic film;
   heating the first consolidated thermoplastic stack to a processing temperature below a melting temperature of the thermoplastic part;
   placing a second consolidated thermoplastic stack over the low melt thermoplastic film; and
   heating the second consolidated thermoplastic stack to the processing temperature to form a thermoplastic repair patch in the repair area.
15. The method of item 14, wherein the first consolidated thermoplastic stack comprises thermoplastic composite plies between low melt thermoplastic surfaces, and wherein heating the first consolidated thermoplastic stack to the processing temperature comprises melting the low melt thermoplastic surfaces.
16. The method of item 14, wherein the processing temperature is approximately 280 degrees Celsius - 340 degrees Celsius.
17. The method of item 14 further comprising:
   applying pressure below 15 psi to the first consolidated thermoplastic stack while heating the first consolidated thermoplastic stack to join the first consolidated thermoplastic stack to the thermoplastic part.
18. The method of item 14 further comprising:
   applying compression to the first consolidated thermoplastic stack while heating the first consolidated thermoplastic stack to the processing temperature to join the first consolidated thermoplastic stack to the thermoplastic part.
19. The method of item 14 further comprising:
   heating the low melt thermoplastic film to the processing temperature prior to placing the first consolidated thermoplastic stack over the low melt thermoplastic film.
20. The method of item 14 further comprising:
   removing a portion of the thermoplastic part to form the repair area.
21. The method of item 20 further comprising:
   treating a surface of the repair area prior to placing the low melt thermoplastic film onto the repair
area of the thermoplastic part, wherein treating comprises cleaning and sanding the repair area.

## Claims

1. A thermoplastic part (202, 302) with a thermoplastic repair patch (204, 304) comprising:
a composite material (206) with a cut-out forming a repair area (210, 303), the composite material (206) having a first melting temperature (208, 230); and
the thermoplastic repair patch (204, 304) in the cut-out, the thermoplastic repair patch (204, 304) comprising a plurality of consolidated thermoplastic stacks (222), each consolidated thermoplastic stack (224, 226, 310, 312, 314, 400) comprising thermoplastic composite plies (232, 244, 322, 324, 326, 406) between low melt thermoplastic surfaces (238, 240, 250, 252, 402, 404) having a second melting temperature (208, 230) lower than the first melting temperature (208, 230).

2. The thermoplastic part (202, 302) of claim 1 further comprising a low melt thermoplastic film (228, 306) between the thermoplastic repair patch (204, 304) and the repair area (210, 303).

3. The thermoplastic part (202, 302) of claim 1 or 2, wherein the first melting temperature (208, 230) is greater than 340 degrees Celsius.

4. The thermoplastic part (202, 302) of any of claims 1-3, wherein the second melting temperature (208, 230) is between 260 degrees Celsius and 335 degrees Celsius.

5. The thermoplastic part (202, 302) of any of claims 1-4, wherein the plurality of consolidated thermoplastic stacks (222) is joined by the low melt thermoplastic surfaces (238, 240, 250, 252, 402, 404).

6. A method (500, 600) of repairing a thermoplastic part (202, 302) comprising:
placing (502) a low melt thermoplastic film (228, 306) onto a repair area (210, 303) of a thermoplastic part (202, 302);
placing (504) a plurality of consolidated thermoplastic stacks (222) over the low melt thermoplastic film (228, 306) to form a thermoplastic repair patch (204, 304); and
heating (506) the thermoplastic repair patch (204, 304) to a processing temperature (256) below a melting temperature (208, 230) of the thermoplastic part (202, 302).

7. The method (500, 600) of claim 6, wherein (512) each consolidated thermoplastic stack (310, 312, 314, 400) of the plurality of consolidated thermoplastic stacks (222) comprises thermoplastic composite plies (232, 244, 322, 324, 326, 406) between low melt thermoplastic surfaces (238, 240, 250, 252, 402, 404), and wherein heating the thermoplastic repair patch (204, 304) to the processing temperature (256) comprises melting the low melt thermoplastic surfaces (238, 240, 250, 252, 402, 404).

8. The method (500, 600) of claim 6 or 7 further comprising:
applying (518) pressure (258) below 103 kPa (15 psi) to the thermoplastic repair patch (204, 304) while heating the thermoplastic repair patch (204, 304) to join the thermoplastic repair patch (204, 304) to the thermoplastic part (202, 302).

9. The method (500, 600) of any of claims 6-8 further comprising:
applying (520) compression to the thermoplastic repair patch (204, 304) while heating the thermoplastic repair patch (204, 304) to the processing temperature (256) to join the thermoplastic repair patch (204, 304) to the thermoplastic part (202, 302).

10. The method (500, 600) of any of claims 6-9 further comprising:
heating (522) the low melt thermoplastic film (228, 306) to the processing temperature (256) prior to placing the plurality of consolidated thermoplastic stacks (222) over the low melt thermoplastic film (228, 306).

11. A method (600) of repairing a thermoplastic part (202, 302) comprising:
placing (602) a low melt thermoplastic film (228, 306) onto a repair area (210, 303) of a thermoplastic part (202, 302);
placing (604) a first consolidated thermoplastic stack (224) over the low melt thermoplastic film (228, 306);
heating (606) the first consolidated thermoplastic stack (224) to a processing temperature (256) below a melting temperature (208, 230) of the thermoplastic part (202, 302);
placing (608) a second consolidated thermoplastic stack (226) over the low melt thermoplastic film (228, 306); and
heating (610) the second consolidated thermoplastic stack (226) to the processing temperature (256) to form a thermoplastic repair patch (204, 304) in the repair area (210, 303).

12. The method (600) of claim 11, wherein (618) the first consolidated thermoplastic stack (224) comprises thermoplastic composite plies (232, 244, 322, 324, 326, 406) between low melt thermoplastic surfaces (238, 240, 250, 252, 402, 404), and wherein heating the first consolidated thermoplastic stack (224) to the processing temperature (256) comprises melting the low melt thermoplastic surfaces (238, 240, 250, 252, 402, 404).

13. The method (600) of any of claims 6-12, wherein (620) the processing temperature (256) is approximately 280 degrees Celsius - 340 degrees Celsius.

14. The method (600) of any of claims 11-13 further comprising:
applying (622) pressure (258) below 103 kPa (15 psi) to the first consolidated thermoplastic stack (224) while heating the first consolidated thermoplastic stack (224) to join the first consolidated thermoplastic stack (224) to the thermoplastic part (202, 302) and/or
applying (624) compression to the first consolidated thermoplastic stack (224) while heating the first consolidated thermoplastic stack (224) to the processing temperature (256) to join the first consolidated thermoplastic stack (224) to the thermoplastic part (202, 302) and/or
heating (616) the low melt thermoplastic film (228, 306) to the processing temperature (256) prior to placing the first consolidated thermoplastic stack (224) over the low melt thermoplastic film (228, 306).

15. The method (600) of any of claims 6-14 further comprising:
removing (508, 612) a portion (218) of the thermoplastic part (202, 302) to form the repair area (210, 303),
optionally further comprising:
treating (510, 614) a surface (212) of the repair area (210, 303) prior to placing the low melt thermoplastic film (228, 306) onto the repair area (210, 303) of the thermoplastic part (202, 302), wherein treating comprises cleaning and sanding the repair area (210, 303).
